Europäisches Patentamt

European Patent Office

Office européen des brevets

(19)

(11) Veröffentlichungsnummer: **0 299 155 B1**

(12) # EUROPÄISCHE PATENTSCHRIFT

(45) Veröffentlichungstag der Patentschrift: **17.06.92**

(51) Int. Cl.⁵: **B23D 45/04**

(21) Anmeldenummer: **88106745.8**

(22) Anmeldetag: **27.04.88**

(54) **Kaltkreissäge mit einem quer zum Werkstückvorschub verstellbaren Schwenklager des Sägeblattarmes.**

(30) Priorität: **14.07.87 DE 3723216**

(43) Veröffentlichungstag der Anmeldung:
**18.01.89 Patentblatt 89/03**

(45) Bekanntmachung des Hinweises auf die
Patenterteilung:
**17.06.92 Patentblatt 92/25**

(84) Benannte Vertragsstaaten:
**AT BE CH DE ES FR GB IT LI LU NL SE**

(56) Entgegenhaltungen:
DE-A- 2 903 574
DE-C- 321 271
FR-A- 2 291 813
GB-A- 2 023 492
GB-A- 2 046 662

(73) Patentinhaber: **HANS KALTENBACH MASCHI-
NENFABRIK GMBH & CO.
Gewerbestrasse 18
W-7850 Lörrach(DE)**

(72) Erfinder: **Burkard, Rudolf
Bahnhofstrasse 90
W-7888 Rheinfelden 4(DE)**

(74) Vertreter: **Schmitt, Hans, Dipl.-Ing. et al
Patentanwälte Dipl.-Ing H. Schmitt Dipl.-Ing.
W. Maucher Dreikönigstrasse 13
W-7800 Freiburg(DE)**

**Beschreibung**

Die Erfindung betrifft eine Kaltkreissäge gemäß dem Oberbegriff des Patentanspruches 1.

Aus der DE-A-29 03 554 ist eine Kappsäge zum Schneiden von Holz bekannt, die ebenfalls einen schwenkbaren Sägeblattarm mit Sägeblatt sowie eine Spannvorrichtung für das Werkstück hat und bei welcher das Schwenklager des Sägeblattarmes quer zum Werkstückvorschub verstellbar und an einem einstellbaren Schwenkteil befestigt ist. Dabei ist ein Gelenkmechanismus für die Sägeblattachse vorgesehen, zu dem vor allem ein Winkelhebel, aber außerdem zusätzliche Verbindungsarme aufweist. Eine im wesentlichen vertikale Kolben-Zylindereinheit dient bei dieser Sägemaschine dazu, das Sägeblatt aus seiner abgesenkten Ruhelage durch einen relativ kurzen Hub anzuheben, wenn ein relativ schmales Kantholz oder Breitt abgesägt werden soll.

Eine zweite, im wesentlichen horizontale Kolben-Zylindereinheit kann dieser Hubbewegung eine zusätzliche Horizontal-Bewegung überlagern bzw. vorschalten, so daß das Sägeblatt seinen ersten Hub von unten nach oben mit größerem Abstand zu einer Spannvorrichtung beginnt, wonach dann der horizontale Zylinder eine Rückzugbewegung durchführt, so daß relativ breite Werkstücke durch das nach oben gehobene und nun horizontal zurückbewegte Sägeblatt abgesägt werden können.

Aus der DE-B-29 15 288 bzw. der GB-A-20 46 652 ist eine Kaltkreissäge bekannt, bei welcher der Vorschub des Sägeblattes von oben nach unten gegen ein Werkstück hin erfolgt. Dabei ist das Schwenklager des Sägeblattarmes an einem quer zum Werkstückvorschub verschiebbaren Schlitten angeordnet, um die Ausgangslage und damit die Lage des Sägeblattes je nach der Abmessung des Werkstückes in eine möglichst günstige Schneidposition bringen zu können. Während des Sägens erfolgt jedoch keine horizontale Verstellung mit Hilfe dieses Schlittens. Vielmehr kann das Sägeblatt jeweils in eine bestmögliche Position relativ zu einem eingespannten, mehr oder weniger breiten Werkstück positioniert werden.

Diese Lösung hat sich bewährt, jedoch benötigt ein derartiger Schlitten mit seinem Verstellantrieb relativ viel Platz und darüber hinaus müssen die Schlittenführungen sehr genau sein, damit bei der Verstellung keine Verspannungen und auch keine Schrägstellungen des Sägeblattes relativ zu dem Auflagetisch für das Werkstück entstehen können.

Es besteht deshalb die Aufgabe, eine Kaltkreissäge gemäß dem Oberbegriff des Patentanspruches 1 zu schaffen, bei welcher der Vorteil erhalten bleibt, daß der Abstand zwischen Schwenklager und Sägeblatt immer gleich ist, dennoch aber eine Verstellung des Sägeblattes quer zum Werkstückvorschub möglich ist, wobei der Platzbedarf der Verstellvorrichtung so gering sein soll, daß die Anordnung bei Kaltkreissägen möglich ist, bei denen das Sägeblatt beim Vorschub von unten nach oben durch einen Auflagetisch verschwenkbar ist.

Die Lösung dieser Aufgabe erfolgt mit Hilfe der Merkmale des kennzeichnenden Teiles des Patentanspruches 1.

Statt eines Schlittens zur Positionierung des Sägeblattarmes vor dem Sägevorgang wird also ein Schwenkteil vorgesehen, dessen Einstell-Schwenkachse festliegt und womit die Vorschub-Schwenkachse des Sägeblattarmes in ihrer Position relativ zum Werkstück verstellt werden kann. Diese Einstell-Schwinge dient also nicht ihrerseits dazu, einen horizontalen Vorschub zu bewirken.

Bei der Positionierung der Vorschub-Schwenkachse mit Hilfe der Schwinge beschreibt diese zwar einen Bogen um die Einstell-Schwenkachse der Schwinge, jedoch ist durch die gegenseitige Anordnung dieser beiden Schwenkachsen dafür Sorge getragen, daß der Schwenkbogen eine Orientierung hat, die weitgehend der gewünschten Verstellrichtung entspricht, während die aufgrund der Krümmung dieses Bogens gleichzeitig stattfindende geringfügige Verstellung quer zu dieser Bewegung praktisch nicht ins Gewicht fällt und durch die Vorschubmittel des Sägeblattarmes auf einfache Weise ausgeglichen werden kann.

In vorteilhafter Weise benötigt dabei ein solches als Schwinge ausgebildetes Schwenkteil relativ wenig Platz, jedenfalls weniger Platz als ein Schlitten, und vor allem werden aufwendige Längsführungen für einen Schlitten vermieden und durch eine wesentlich problemlosere Schwenklagerung ersetzt.

Der Schwenkwinkel, um welchen die Vorschub-Schwenkachse ihrerseits verschwenkbar ist, kann kleiner als 180 Grad sein und zweckmäßigerweise sind die Mitte der Einstell-Schwenkachse und die der Vorschub-Schwenkachse auch in den beiden Endstellungen des Schwenklagers gegeneinander höhenversetzt. Dies gilt vor allem dann, wenn ein relativ großer Abstand zwischen den beiden Schwenkachsen vorhanden ist, was gleichzeitig den Vorteil hat, daß die Krümmung des Schwenkbogens relativ klein ist. Es ergibt sich dann bei der Verschwenkung der Vorschub-Schwenkachse um die Einstell-Schwenkachse in vorteilhafter Weise eine sehr effektive Verstellung des Sägeblattarmes quer zum Werkstück.

Beispielsweise kann der Schwenkwinkel des das Schwenklager tragenden Schwenkteiles kleiner als 90°, vorzugsweise etwa 45° sein.

Vorzugsweise kann das Schwenklager des Schwenkteiles über oder unter der Mitte der beiden Endstellungen des Vorschub-Schwenklagers des Sägeblattarmes angeordnet sein, so daß eine Tangente an den von dem Mittelpunkt des Schwenklagers beschriebenen Schwenkbogen in dessen Hälfte oder Mitte parallel zu der Sägetischplatte od.dgl. verläuft. Auf diese Weise wird die Schwenkbewegung bestmöglich in eine Verstellbewegung - quer zum Werkstückvorschub umgesetzt.

Eine besonders zweckmäßige Ausführungsform der Erfindung kann darin bestehen, daß der das Schwenklager des Sägeblattarmes tragende Schwenkteil eine Schwinge ist, die eine Befestigungsstelle für den Angriff eines Antriebselementes mit Abstand zur Mitte der Einstell-Schwenkachse für die Durchführung ihrer Verschwenkung und ihre Festlegung haben kann. Eine solche Schwinge erlaubt in vorteilhafter Weise einen relativ großen Abstand zwischen der Einstell-Schwenkachse und der Vorschub-Schwenkachse, so daß sie selbst nur relativ geringfügige Schwenkbewegungen bei den erwähnten Verstellbewegungen des Sägeblattarmes durchführen muß. Ausgestaltungen dieser Schwingenlösung, vor allem bezüglich der Antriebselemente für deren Verstellung sind Gegenstand der Ansprüche 6 und 7.

Eine andere Ausführungsform der Erfindung kann darin bestehen, daß die Einstell-Schwenkachse des Schwenkteiles und die Vorschub-Schwenkachse des Sägeblattarmes innerhalb der Schwinge zu einem Exzenter verbunden sind. Es ergibt sich dann ein einziges Maschinenteil, so daß für dessen Unterbringung noch weniger Platzbedarf besteht. Allerdings wird in der Regel dann der Abstand der beiden Schwenkachsen geringer sein. Zur Verschwenkung der Vorschub-Schwenkachse des Sägeblattarmes können dann die Drehbolzen oder -zapfen dieses Exzenters zwischen den Endlagen insbesondere um bis zu 180° verdrehbar sein. Somit ergibt sich bei Verwendung eines Exzenters dennoch eine Verstellmöglichkeit um das Doppelte der Exzentrizität.

Anspruch 10 enthält eine Ausführungsform, bei welcher der Vorschub des Sägeblattarmes von oben nach unten gegen eine Auflageplatte eines Auflagetisches für das zu bearbeitende Material gerichtet ist.

Zweckmäßige Ausgestaltungen des als Schwinge ausgebildeten Schwenkteiles sind Gegenstand der Ansprüche 11 bis 13. Dabei enthält Ansprüche 12 eine Lösung, wie die Lagerung des Sägeblattarmes verbreitet sein kann, um eine noch bessere und präzisere Führung und größere Kraftübertragung zu erlauben. Anspruch 13 enthält eine Maßnahme, wie die Schwinge möglichst nah an den Ort der Entstehung der Säge-Reaktionskräfte verlegt werden kann.

Insgesamt ergibt sich vor allem bei Kombination einzelner oder mehrerer der vorbeschriebenen bzw. in den Ansprüchen enthaltenen Merkmale und Maßnahmen eine Kaltkreissäge mit schwenkbarem Sägearm, sei er von oben nach unten gegen einen Auflagetisch schwenkbar, sei er von unten nach oben durch einen Schlitz des Tisches verschwenkbar, der mit einfachen Mitteln und ohne einen Schlitten relativ zum Werkstück und quer zu dessen Vorschub verstellt werden kann.

Nachstehend sind mehrere Ausführungsformen der Erfindung anhand der Zeichnung mit ihren erfindungswesentlichen Merkmalen und Einzelheiten noch näher beschrieben.

Es zeigt in schematisierter Darstellung:

Fig. 1    einen Teilschnitt einer Kaltkreissäge mit Draufsicht des Sägeblattes, wobei dieses bei seinem Vorschub von unten nach oben durch einen Schlitz eines Auflagetisches verschwenkbar ist und seine Vorschub-Schwenkachse an einer Schwinge ihrerseits verschwenkbar gelagert ist und dazu eine relativ zu einer Mutter drehbare und axial verstellbare Spindel an der Schwinge angreift.

Fig. 2    in vergrößertem Maßstab eine gegenüber Fig. 1 um 90° gedrehte Ansicht der Schwinge mit ihrer Lagerung und der Befestigungsstelle für ihr Verstellelement,

Fig. 3    eine der Fig. 1 entsprechende Darstellung der Kaltkreissäge, wobei an der Schwinge eine Arbeitszylinder angreift,

Fig. 4    eine der Fig. 2 entsprechende Darstellung der Schwinge mit abgewandelter Befestigungsstelle für das abgewandelte Verstellelement,

Fig. 5    eine Kaltkreissäge, bei welcher das Sägeblatt mit seinem Getriebe als Sägeblattarm von oben nach unten gegen einen Auflagetisch für das Werkstück verschiebbar ist und eine Schwinge für eine Verstellung des Sägeblattes quer zum Werkstückvorschub vorgesehen ist,

Fig. 6    eine um 90° gedrehte Anordnung der Schwinge gemäß Fig. 5 mit einer Befestigungsstelle für das Verstellelement zum Verschwenken dieser Schwinge sowie

Fig. 7    in vergrößertem Maßstab eine Ansicht einer Schwinge mit ihrer Einstell-Schwenkachse und der Vorschub-Schwenkachse, die an einem verbreiterten Getriebegehäuse-Ansatz angreift.

Bei den nachfolgend näher beschriebenen verschiedenen Ausführungsbeispielen sind übereinstimmende oder gleich wirkende Teile auch bei etwas abweichender Ausgestaltung jeweils mit übereinstimmenden Bezugszeichen versehen.

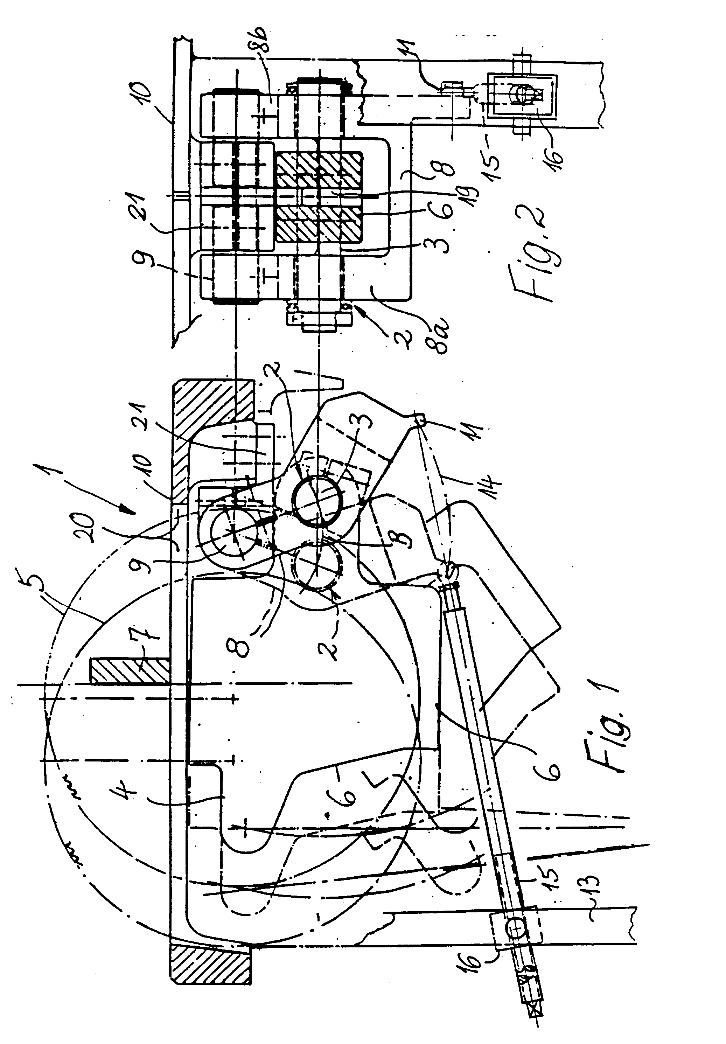

Eine im ganzen mit 1 bezeichnete, in den Figuren 1, 3 und 5 jeweils schematisiert dargestellte Kaltkreissäge hat jeweils einen für den Vorschub gegenüber einem Schwenklager 2 mit einer Vorschub-Schwenkachse 3 schwenkbaren Sägeblattarm 4 mit Sägeblatt 5 und Getriebekasten 6. Ferner ist eine nicht näher dargestellte Spannvorrichtung für das Werkstück 7 vorgesehen und das Schwenklager 2 des Sägeblattarmes 4, der praktisch von dem Getriebegehäuse 6 gebildet wird, ist in noch näher zu beschreibender Weise quer zum Werkstückvorschub verstellbar und festlegbar und liegt dann während des Sägens fest.

Dabei ist in allen Ausführungsbeispielen vorgesehen, daß das Schwenklager 2 des Sägeblattarmes 4 seinerseits an einem einstellbaren Schwenkteil - in allen Ausführungsbeispielen einer Schwinge 8 - befestigt ist, deren Einstell-Schwenkachse 9 festliegt und parallel zu der Vorschub-Schwenkachse 3 des Sägeblattarmes 4 läuft und einen Abstand hat und gegenüber einer parallel zur Werkstückaufnahme, also dem Tisch 10 verlaufenden Ebene - im Ausführungsbeispiel einer Horizontalebene - durch das Schwenklager 2 des Sägeblattarmes 4 zumindest in den Zwischenstellungen des Schwenkteiles bzw. der Schwinge 8 zwischen seinen beiden extremen Verstellpositionen in der Höhe versetzt ist. Diesen Höhenversatz der beiden Schwenkachsen 3 und 9 erkennt man in allen Figuren. Ferner erkennt man in den Figuren 1, 3 und 5, daß durch eine vor dem eigentlichen Sägevorgang erfolgende Verschwenkung der Vorschub-Schwenkachse 3 um die Einstell-Schwenkachse 9 das Sägeblatt 5 und sein Antrieb aus einer in eine andere Extremlage quer zur Längserstreckung des Werkstückes 7 und zu dessen Vorschubrichtung verstellt werden kann. Zwar macht es dabei eine geringfügige bogenförmige Bewegung, wobei jedoch die Hauptbewegungskomponente quer zum Werkstückvorschub gerichtet ist und der dabei auftretende geringfügige Höhenversatz vernachlässigbar ist und leicht von den Vorschubmitteln für das Sägeblatt 5 ausgeglichen werden kann. Die zur Anpassung an unterschiedliche Werkstücke und Werkstückabmessungen vorteilhafte Verstellung des Sägeblattes 5 vor dem jeweiligen Sägevorgang und unabhängig von der späteren Vorschubbewegung des Sägeblattes wird also mit sehr einfachen Mitteln erreicht, wobei in vorteilhafter Weise aufwendige Schiebeführungen vermieden und durch eine einfache Schwenklagerung ersetzt werden.

In den Figuren 1, 3 und 5 erkennt man, daß der Schwenkwinkel, um welchen die Vorschub-Schwenkachse 3 ihrerseits verschwenkbar ist, bei entsprechend großem Abstand der beiden Schwenkachsen 3 und 9 kleiner als 180° sein kann und ist und daß die Mitte der Einstell-Schwenkachse 9 und die der Vorschub-Schwenkachse 3 auch in den beiden Endstellungen des Schwenklagers 2 gegeneinander höhenversetzt sind. Somit wird von dem Schwenkkreis wirklich nur ein Bogenstück benutzt, bei welchem der bei der Schwenkung auftretende Höhenversatz vernachlässigbar ist.

In den dargestellten Ausführungsbeispielen ist der Schwenkwinkel der das Schwenklager 2 tragenden Schwinge 8 sogar kleiner als 90° und beträgt z.B. etwa 45°.

Die dargestellten Ausführungsbeispiele zeigen ferner, daß das Schwenklager mit der Einstell-Schwenkachse 9 der Schwinge 8 am besten über oder unter der Mitte der beiden Endstellungen des Vorschub-Schwenklagers 2 des Sägeblattarmes 4 angeordnet ist, so daß eine Tangente an den von dem Mittelpunkt des Schwenklagers 2 beschriebenen Schwenkbogen B in dessen Hälfte oder Mitte parallel zu der Sägetischplatte 10 verläuft.

Wie bereits erwähnt, ist der das Schwenklager 2 des Sägeblattarmes 4 tragende Schwenkteil in allen drei Ausführungsbeispielen eine Schwinge 8. Diese hat in jedem dieser Fälle eine Befestigungsstelle 11 für den Angriff eines Antriebselementes mit Abstand zur Mitte der Einstell-Schwenkachse 9, damit die Verschwenkung der Schwinge 8 und auch ihre Festlegung problemlos und an einem günstigen Hebelarm durchgeführt werden kann.

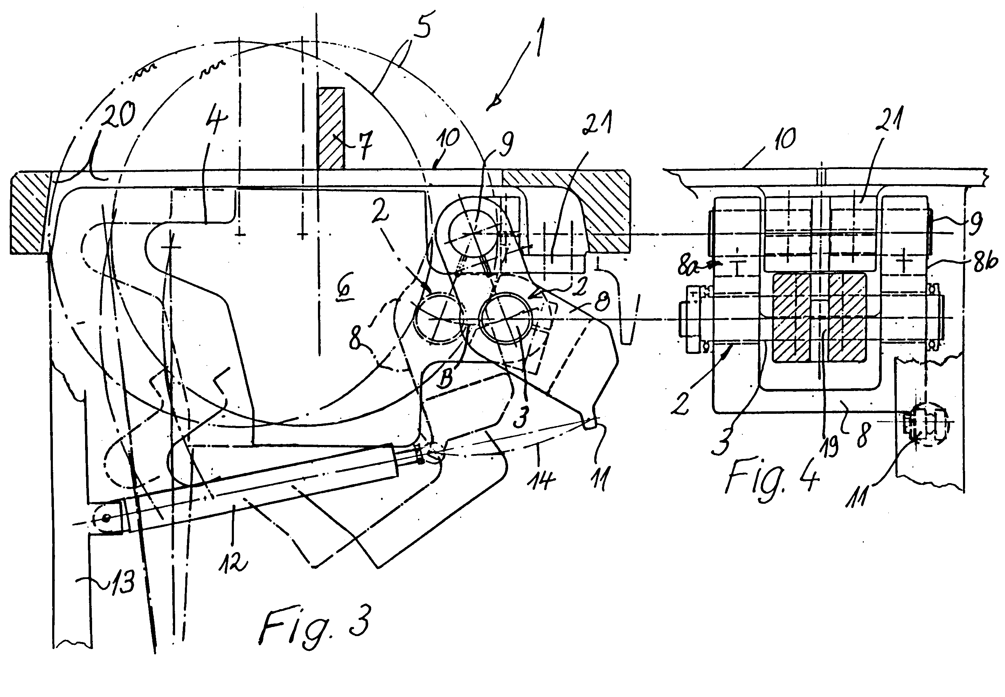

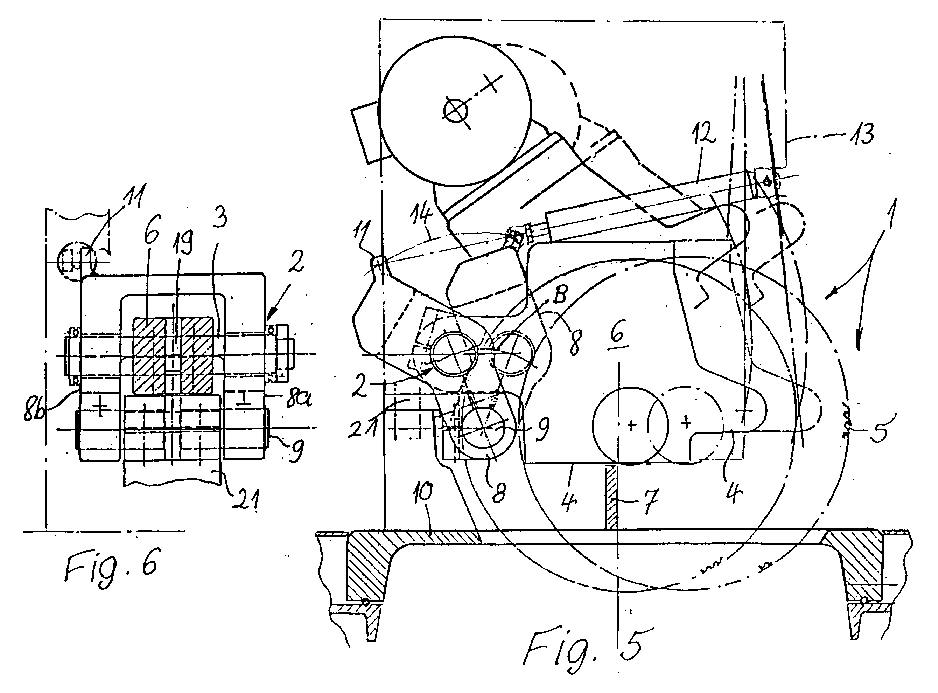

In Fig. 3 und 5 ist dargestellt, daß als Antriebelement für die verschwenkbare Schwinge 8 ein Arbeitzylinder 12 vorgesehen sein kann, der mit einem seiner relativ zueinander verstellbaren Teile schwenkbar an der Schwinge 8 und mit dem anderen Teil schwenkbar an dem Maschinengestell 13 oder dem ggfs. drehbaren Tisch 10 der Sägemaschine 1 befestigt ist. In Fig. 3 und 5 erkennt man deutlich den beim Betätigen dieses Arbeitzylinders 12 von der Befestigungsstelle 11 der Schwinge 8 beschriebenen Kreisbogen 14 zwischen deren beiden Endstellungen, die den beiden Endstellungen der Vorschub-Schwenkachse 3 entsprechen.

Fig. 1 zeigt eine Ausführungsform, bei welcher als Antriebselement für die Schwinge 8 eine Spindel 15 mit einer Mutter 16 vorgesehen ist, wobei die Mutter 16 vorzugsweise ortsfest, aber schwenkbar am Maschinengestell 13 - evtl. auch am Auflagetisch 10 - gelagert ist und die Spindel 15 axial verstellbar an der Schwinge 8 angreift. Wird die Spindel 15 in Drehung versetzt, wird sie dadurch gleichzeitig axial verstellt, so daß entweder eine Verstellung der Schwinge 8 durch einen Kurbeltrieb von Hand oder aber auch mit Hilfe eines Motors durchgeführt werden kann.

An dieser Stelle sei erwähnt und eingeschoben, daß die Einstell-Schwenkachse 9 des Schwenkteiles und die Vorschub-Schwenkachse 3 des Sägeblattarmes 4 ggfs. statt ihrer getrennten Lagerung innerhalb einer Schwinge 8 zu einem Exzenter verbunden sein könnten. Da dabei der Abstand der Mitten dieser Schwenkachsen in der Regel geringer sein wird, ergibt sich ein geringerer Platzbedarf. Andererseits ist es dann zweckmäßig, wenn zur Verschwenkung der Vorschub-Schwenkachse 3 des Sägeblattarmes 4 der oder die die Einstell-Schwenkachse 9 bildenden Drehbolzen oder -zapfen des Exzenters zwischen den Endlagen um bis zu 180° verdrehbar sind.

In den Figuren 2, 4, 6 und 7 erkennt man, daß die als Schwenkteil ausgebildete Schwinge 8 gabelförmig oder U-förmig ausgestaltet ist und das schwenkbare Ende des Sägeblattarmes 4 bzw. des Getriebekastens 6 zwischen ihren beiden U-Schenkeln 8a und 8b aufnimmt, die von der dieses Ende des Sägeblattarmes 4 durchsetzenden Vorschub-Schwenkachse 3 beide ihrerseits durchsetzt sind. Somit ergibt sich eine stabile Lagerung dieser Vorschub-Schwenkachse 3.

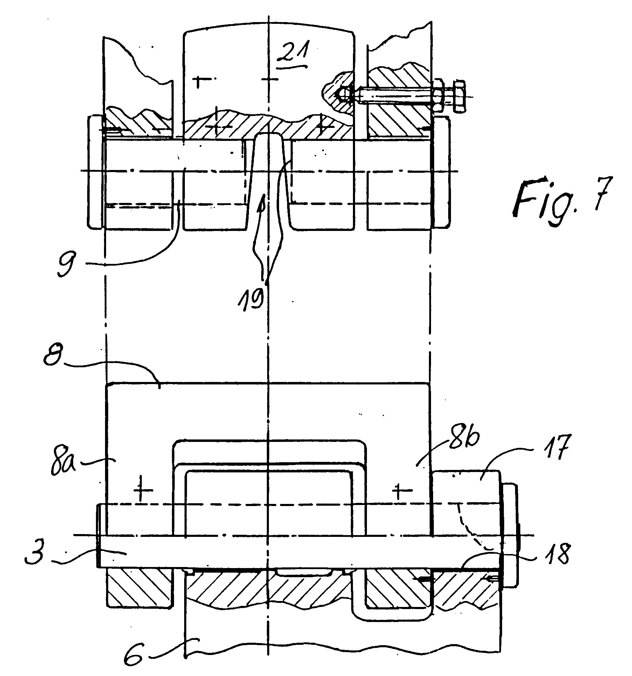

In Fig. 7 ist dabei noch eine besondere Ausführungsform dargestellt, bei welcher der Sägeblattarm 4 zumindest im Lagerbereich verbreitert ist und mit der Verbreiterung 17 auf eine Außenseite der Schwinge 8 bzw. eines U-Schenkels der Schwinge 8 reicht und einen Lagerdurchtritt 18 für die entsprechend verlängerte Vorschub-Schwenkachse 3 hat. Gegebenenfalls wäre eine analoge Verbreiterung 17 auch nach der anderen Seite der Schwinge 8 möglich, falls die zu übertragenden Kräfte dies als zweckmäßig erscheinen lassen. Ferner erkennt man in dieser Figuren und dabei besonders gut auch in Fig. 7, daß die Einstell-Schwenkachse 9 und der ihr nahe Bereich des Getriebegehäuses 6 - im Ausführungsbeispiel in ihrer Mitte - einen Querschlitz 19 oder eine Unterbrechung aufweist, also praktisch in zwei Schwenkbolzen unterteilt ist, so daß das Sägeblatt 5 in einer Endstellung in diesen Querschlitz 19 eingreifen kann. Man erkennt in den Figuren 1, 3 und 5, daß in einer Endlage die Einstell-Schwenkachse 9 scheinbar vom Sägeblatt 3 überdeckt wird. Dies ist durch die vorerwähnte Maßnahme möglich, wodurch insgesamt erreicht wird, daß die Schwinge 8 und ihre Einstell-Schwenkachse 9 möglichst nah am Ort der Entstehung der Säge-Reaktionskräfte installiert werden kann.

In den Figuren 1 und 3 sind Kaltkreissägen 1 dargestellt, bei welchen das Sägeblatt 5 beim Sägen von unten her durch einen Schlitz 20 des Auflagetisches 10 für das zu bearbeitende Material oder Werkstück 7 nach oben bewegbar ist. Dabei ist vorgesehen, daß der das Schwenklager 2 des Sägeblattarmes 4 tragende Schwenkteil, nämlich die Schwinge 8, unterhalb der Tischplatte 10 schwenkbar gelagert ist und die dazu vorgesehene Einstell-Schwenkachse 9 über der Vorschub-Schwenkachse 3 des Schwenklagers 2 des Sägeblattarmes 4 angeordnet ist. Diese Einstell-Schwenkachse 9 befindet sich also möglichst hoch und möglichst nah unter dem Tisch 10, wodurch sich insgesamt günstige Hebelverhältnisse auch im Hinblick auf den Vorschubantrieb bei diesem Typ von Kaltkreissäge 1 ergeben.

In Fig. 5 ist angedeutet, daß die Verstellung des Sägeblattes 5 quer zum Werkstückvorschub auch bei einer Kaltkreissäge 1 möglich ist, bei welcher der Sägeblattarm 4 mit dem Sägeblatt 5 für den Vorschub gegenüber einem Schwenklager 2 von oben nach unten gegen einen Auflagetisch 10 bewegbar ist. In diesem Falle ist der das Schwenklager 2 für den Sägeblattarm 4 tragende, als Schwinge 8 ausgebildete Schwenkteil über der Ebene des Auflagetisches 10 schwenkbar gelagert und die für diese Schwenklagerung vorgesehene Einstell-Schwenkachse 9 ist tiefer als die Vorschub-Schwenkachse 3 des Sägeblattarmes 4 angeordnet. Somit ist auch bei diesem Ausführungsbeispiel die Einstell-Schwenkachse 9 möglichst nahe an den Tisch 10 angeordnet.

Es sei noch erwähnt, daß die Einstell-Schwenkachse 9 in allen Ausführungsbeispielen jeweils einen Lagerbock 21 durchsetzt, der von den Schwenkeln 8a und 8b der Schwinge 8 umgriffen ist. Dieser Lagerbock 21 kann entweder unmittelbar an dem Tisch 10 oder dem Maschinengestell 13 angeformt oder angegossen oder aber auch als separates Teil angeschraubt sein. Es ergibt sich also für die Schwenklagerung der Schwinge 8 eine sehr einfache Konstruktion und dabei die Möglichkeit, die auftretenden Kräfte gut zu beherrschen und gut in das Maschinengestell einzuleiten.

Ein weiterer Vorteil der Schwinge 8 besteht noch darin, daß sie auch eine Verstellung in Richtung der Sägeblattachse ermöglicht, um die Sägeblattoberfläche in erwünschter Weise relativ zu einer Spannvorrichtung für das Werkstück so einstellen zu können, daß bei Schrägschnitten keine Verluste und keine Nachstellungne erforderlich sind.

**Patentansprüche**

1. Kaltkreissäge (1) mit einem für den Vorschub gegenüber einem Schwenklager (2) mit einer Vorschub-Schwenkachse (3) schwenkbaren Sägeblattarm (4) mit Sägeblatt (5) sowie mit einer Spannvorrichtung oder dergleichen für das Werkstück (7), wobei das Sägeblatt (5) beim Sagen von unten her durch einen Schlitz (20) oder dergleichen eines Auflagetisches (10) für das zu bearbeitende Werkstück (7) nach oben bewegbar ist und wobei das Schwenklager (2) des Sageblattarmes (4) quer zum Werkstückvorschub verstellbar und festlegbar und seinerseits an einem einstellbaren Schwenkteil befestigt ist, dessen Einstell-Schwenkachse (9) festliegt und zu der Vorschubschwenkachse (3) des Sägeblattarmes (4) parallele und beabstandet und gegenüber einer parallel zur Werkstückauflage verlaufenden Ebene durch das Schwenklager (2) des Sägeblattarmes (4) zumindest in Zwischenstellungen des Schwenkteiles zwischen seinen beiden extremen Verstell-Positionen in der Höhe versetzt ist, **dadurch gekennzeichnet,** daß das Schwenkteil eine vor dem Sägevorgang relativ zum Werkstück (7) positionierbare und während des Sägevorganges festliegende Schwinge (8) ist und daß diese das Schwenklager (2) des Sägeblattarmes (4) tragende Schwinge (8) unterhalb der Tischplatte (10) schwenkbar gelagert und ihre Einstell-Schwenkachse (9) über der Vorschub-Schwenkachse (3) des Sägeblattarmes (4) angeordnet ist.

2. Kaltreissäge nach Anspruch 1, dadurch gekennzeichnet, daß der Schwenkwinkel, um welchen die Vorschub-Schwenkachse (3) ihrerseits verschwenkbar ist, kleiner als 180° ist und daß die Mitte der Einstell-Schwenkachse (9) und die der Vorschub-Schwenkachse (3) auch in den beiden Endstellungen des Schwenklagers (2) gegeneinander höhenversetzt sind.

3. Kaltkreissäge nach Anspruch 1 oder 2, dadurch gekennzeichnet, daß der Schwenkwinkel des das Schwenklager (2) tragenden Schwenkteiles kleiner als 90°, vorzugsweise etwa 45° ist.

4. Kaltkreissäge nach einem der Ansprüche 1 bis 3, dadurch gekennzeichnet, daß das Schwenklager des Schwenkteiles über oder unter der Mitte der beiden Endstellungen des Vorschub-Schwenklagers (2) des Sägeblattarmes (4) angeordnet ist und eine Tangente an den von dem Mittelpunkt des Schwenklagers (2) beschriebenen Schwenkbogen ( B) in dessen Hälfte parallel zu der Sägetischplatte (10) od.dgl. verläuft.

5. Kaltkreissäge nach einem der Ansprüche 1 bis 4, dadurch gekennzeichnet, daß der das Schwenklager (2) des Sägeblattarmes (4) tragende Schwenkteil eine Schwinge (8) ist, die eine Befestigungsstelle (11) für den Angriff eines Antriebselementes mit Abstand zur Mitte der Einstell-Schwenkachse (9) für die Durchführung ihrer Verschwenkung und ihre Festlegung hat.

6. Kaltkreissäge nach einem der Ansprüche 1 bis 5, dadurch gekennzeichnet, daß als Antriebselement für die verschwenkbare Schwinge (8) ein Arbeitszylinder (12) vorgesehen ist, der mit einem seiner relativ zueinander verstellbaren Teile schwenkbar an der Schwinge (8) und mit dem anderen Ende schwenkbar an dem Maschinengestell (13) und/oder dem ggfs. drehbaren Tisch (10) der Sägemaschine (1) befestigt ist.

7. Kaltkreissäge nach einem der Ansprüche 1 bis 5, dadurch gekennzeichnet, daß als Antriebselement für die Schwinge (8) eine Spindel (15) mit einer Mutter (16) vorgesehen ist, wobei die Mutter (16) vorzugsweise ortsfest und drehfest aber schwenkbar am Maschinengestell (13) oder Auflagetisch (10) gelagert ist und die Spindel (15) axial verstellbar an der Schwinge (8) angreift.

8. Kaltkreissäge nach einem der Ansprüche 1 bis 4, dadurch gekennzeichnet, daß die Einstell-Schwenkachse (9) des Schwenkteiles und die Vorschub-Schwenkachse (3) des Sägeblattarmes (4) innerhalb der Schwinge (8) zu einem Exzenter verbunden sind.

9. Kaltkreissäge nach Anspruch 8, dadurch gekennzeichnet, daß zur Verschwenkung der Vorschub-Schwenkachse (3) des Sägeblattarmes (4) der oder die Drehbolzen oder -zapfen des Exzenters zwischen den Endlagen insbesondere um bis zu 180° verdrehbar ist/sind.

10. Kaltkreissäge mit einem für den Vorschub gegenüber einem Schwenklager von oben nach unten einen Auflagetisch für das zu bearbeitende Material bewegbaren Sägeblatt nach einem der Ansprüche 1 bis 9, dadurch gekennzeichnet, daß der das Schwenklager (2) für den Sägeblattarm (4) tragende Schwenkteil über der Ebene des Auflagetisches (10) schwenkbar gelagert ist und seine Einstell-Schwenkachse (9) vorzugsweise tiefer als die Vorschub-Schwenkachse (3) des Sägeblattarmes (4) angeordnet ist.

11. Kaltkreissäge nach einem der Ansprüche 1 bis 10, dadurch gekennzeichnet, daß die als Schwenkteil ausgebildete Schwinge (8) gabelförmig oder U-förmig ausgestaltet ist und das schwenkbare Ende des Sägeblattarmes (4) zwischen ihren beiden U-Schenkeln (8a, 8b) aufnimmt, die von der dieses Ende des Sägeblattarmes (4) durchsetzenden Vorschub-Schwenkachse (3) beide ihrerseits durchsetzt sind.

12. Kaltkreissäge nach einem der Ansprüche 1 bis 11, dadurch gekennzeichnet, daß der Sägeblattarm (4) zumindest im Lagerbereich verbreitert ist und mit der Verbreiterung (17) auf wenigstens eine Außenseite der Schwinge (8) reicht und einen Lagerdurchtritt (18) für die entsprechend verlängerte Vorschub-Schwenkachse (3) hat.

13. Kaltkreissäge nach einem der vorstehenden Ansprüche, dadurch gekennzeichnet, daß die Einstell-Schwenkachse (9) - vorzugsweise in ihrer Mitte - einen Querschlitz (19) oder eine Unterbrechung aufweist, in die das Sägeblatt (5) in einer Endlage eingreift.

## Claims

1. A cold circular saw (1) having a saw blade arm (4) with saw blade (5) as well as a clamping device or the like for the workpiece (7), for the feed said saw blade arm (4) being adapted to swivel relative to a swivel bearing (2) with a feed swivel axis (3), during sawing the saw blade (5) being movable upwardly from below through a slot (20) or the like in a supporting table (10) for the workpiece (7) to be cut, the swivel bearing (2) of the saw blade am (4) being adapted to be adjusted transversely to the workpiece feed and to be fixed and for its part being mounted on an adjustable swivel member, the adjustment swivel axis (9) of which swivel meter is stationary, is in parallel, spaced relationship to the feed swivel axis (3) of the saw blade arm (4) and is vertically offset relative to a plane running parallel to the workpiece support, through the swivel bearing (2) of the saw blade arm (4) at least in intermediate positions of the swivel member between the two extreme adjusting positions thereof, **characterized in that** the swivel member is a rocker arm (8) which is adapted to be positioned relative to the workpiece (7) prior to the sawing operation and is stationary during the sawing operation and that said rocker arm (8) carrying the swivel bearing (2) of the saw blade arm (4) is swivel-mounted underneath the tabletop (10) and the adjustment swivel axis (9) of said rocker am is arranged above the feed swivel axis (3) of the saw blade arm (4).

2. A cold circular saw as claimed in claim 1, characterized in that the angle of traverse through which the feed swivel axis (3) is for its part adapted to swivel is smaller than 180° and that the centre of the adjustment swivel axis (9) and that of the feed swivel axis (3) are vertically offset also in the two end positions of the swivel bearing (2).

3. A cold circular saw as claimed in claim 1 or claim 2, characterized in that the angle of traverse of the swivel member carrying the swivel bearing (2) is smaller than 90°, preferably about 45°.

4. A cold circular saw as claimed in any one of claims 1 to 3, characterized in that the swivel bearing of the swivel member is arranged above or below the centre of the two end positions of the feed swivel bearing (2) of the saw blade arm (4) and a tangent applied medially to the arc of traverse (B) described by the central point of the swivel bearing (2) runs parallel to the saw tabletop (10) or the like.

5. A cold circular saw as claimed in any one of claims 1 to 4, characterized in that the swivel member carrying the swivel bearing (2) of the saw blade arm (4) is a rocker arm (8) which, for being swivelled and fixed, has a fastening location (11) for the application of a driving element in spaced relationship to the centre of the adjustment swivel axis (9).

6. A cold circular saw as claimed in any one of claims 1 to 5, characterized in that as the driving element for the swivelling rocker arm (8) there is a working cylinder (12) provided which with one of the parts thereof adjustable relative to one another is swivel-mounted on the rocker am (8) and with the other end is swivel-mounted on the machine frame (13) and/or the possibly rotatable table (10) of the sawing machine (1).

7. A cold circular saw as claimed in any one of claims 1 to 5, characterized in that a spindle (15) with a nut (16) is provided as the driving element for the rocker arm (8), the nut (16) preferably being mounted to the machine frame (13) or supporting table (10) so as to be stationary and non-rotatable but capable of swivelling and the spindle (15) acting axially adjustably upon the rocker arm (8).

8. A cold circular saw as claimed in any one of claims 1 to 4, characterized in that the adjustment swivel axis (9) of the swivel member and the feed swivel axis (3) of the saw blade arm (4) are connected within the rocker arm (8) to form an eccentric.

9. A cold circular saw as claimed in claim 8, characterized in that to swivel the feed swivel axis (3) of the saw blade arm (4) the pivot pin-(s) of the eccentric is/are twistable between the end positions particularly through up to 180°.

10. A cold circular saw having a saw blade which, for feed, is movable downwardly from above relative to a swivel bearing and towards a supporting table for the material to be cut, as claimed in any one of claims 1 to 9, characterized in that the swivel member carrying the swivel bearing (2) for the saw blade arm (4) is swivel-mounted above the plane of the supporting table (10) and the adjustment swivel axis (9) thereof is preferably arranged lower than the feed swivel axis (3) of the saw blade arm (4).

11. A cold circular saw as claimed in any one of claims 1 to 10, characterized in that the rocker am (8) taking the form of the swivel member is of forked or U-shaped configuration and receives the swivelling end of the saw blade arm (4) between the two U-limbs (8a, 8b) thereof, the latter both being traversed by the feed swivel axis (3) traversing said end of the saw blade arm (4).

12. A cold circular saw as claimed in any one of claims 1 to 11, characterized in that the saw blade arm (4) is widened at least in the bearing area and with the widening (17) reaches to at least one exterior of the rocker arm (8) and has a bearing passage (18) for the correspondingly lengthened feed swivel axis (3).

13. A cold circular saw as claimed in any one of the preceding claims, characterized in that the adjustment swivel axis (9) - preferably in the centre thereof - has a transverse slot (19) or an interruption engaged by the saw blade (5) in one end position.

**Revendications**

1. Scie circulaire (1) à froid, comprenant un bras (4) porteur de la lame de scie, pouvant osciller, de manière à effectuer un mouvement d'avance, par rapport à une articulation (2) de pivotement comportant un axe pivot (3) d'avance, ce bras portant une lame (5) de scie, et comprenant ensuite un dispositif de serrage ou similaire pour la pièce à travailler (7), la lame (5) de scie étant déplacée, lors du sciage, de bas en haut, à travers une fente (20) ou similaire pratiquée dans une table (10) de support de la pièce à travailler (7), et l'articulation (2) de pivotement du bras (4) porteur de la lame de scie étant réglable transversalement au sens de l'avance de la pièce à travailler et pouvant être immobilisée, étant ellemême fixée sur un élément oscillant réglable, dont l'axe pivot (9) de réglage est fixe, parallèle à et espacé par rapport à l'axe pivot (3) d'avance du bras (4) porteur de la lame de scie, et est décalé verticalement, au moins dans les positions intermédiaires comprises entre les deux positions de fin de course de réglage de l'élément oscillant, par rapport à un plan parallèle au support de la pièce à travailler, ce plan passant par l'articulation (2) de pivotement du bras (4) porteur de la lame de scie, caractérisée en ce que l'élément oscillant est un bras oscillant (8) pouvant être positionné par rapport à la pièce à travailler (7) avant l'opération de sciage et étant immobilisé pendant l'opération de sciage, et en ce que ce bras oscillant (8) portant l'articulation (2) de pivotement du bras (4) porteur de la lame de scie est articulé de façon pivotante sous le plateau de la table (10), et en ce que l'axe pivot (9) de réglage est disposé au-dessus de l'axe pivot (3) d'avance du bras (4) porteur de la lame de scie.

2. Scie circulaire à froid selon la revendication 1, caractérisée en ce que l'angle de pivotement, dans lequel l'axe pivot (3) d'avance peut osciller, est inférieur à 180°, et en ce que le centre de l'axe pivot (9) de réglage et celui de l'axe pivot (3) d'avance sont décalés verticalement, l'un par rapport à l'autre, également dans les positions de fin de course de l'articulation (2) de pivotement.

3. Scie circulaire à froid selon l'une des revendications 1 ou 2, caractérisée en ce que l'angle de pivotement de l'élément oscillant portant l'articulation (2) de pivotement est inférieur à 90°, et est de préférence de l'ordre de 45°.

4. Scie circulaire à froid selon l'une des revendications 1 à 3, caractérisée en ce que l'articulation de pivotement de l'élément oscillant est disposée au-dessus ou en dessous du centre défini par les deux positions de fin de course de l'articulation (2) de pivotement d'avance du bras (4) porteur de la lame de scie, et en ce qu'une tangente à l'arc (B) de basculement décrit par le centre de l'articulation (2) de pivotement, joignant cet arc au milieu de ce dernier, est parallèle au plateau de la table (10) de sciage ou similaire.

5. Scie circulaire à froid selon l'une des revendications 1 à 4, caractérisée en ce que l'élément oscillant portant l'articulation (2) de pivotement du bras (4) porteur de la lame de scie est un bras oscillant (8) qui est pourvu d'un point d'attache (11) permettant le raccordement d'un élément de commande, à une certaine distance par rapport à l'axe pivot (9) de réglage, destiné à commander le basculement et l'immobilisation du bras oscillant.

6. Scie circulaire à froid selon l'une des revendications 1 à 5, caractérisée en ce que l'élément de commande du bras oscillant (8) est un cylindre (12) de travail qui est relié par l'une de ses parties, qui sont mobiles les unes par rapport aux autres, de façon pivotante au bras oscillant (8), et est fixé, par son autre extrémité, de façon pivotante sur le bâti (13) de la machine et/ou sur la table (10), éventuellement pivotante, de la scie circulaire (1).

7. Scie circulaire à froid selon l'une des revendications 1 à 5, caractérisée en ce que l'élément de commande du bras oscillant (8) est une broche filetée (15) pourvue d'un écrou (16), l'écrou (16) étant de préférence logé de façon stationnaire et immobile en rotation, mais de façon pivotante dans le bâti (13) de la machine ou dans la table (10) de support, et en ce que la broche filetée (15) agit de façon mobile axialement sur le bras oscillant (8).

8. Scie circulaire à froid selon l'une des revendications 1 à 4, caractérisée en ce que l'axe pivot (9) de réglage de l'élément oscillant et l'axe pivot (3) d'avance du bras (4) porteur de la lame de scie sont réunis à l'intérieur du bras oscillant de manière à former un excentrique.

9. Scie circulaire à froid selon la revendication 8, caractérisée en ce qu'afin de déplacer en basculant l'axe pivot (3) d'avance du bras (4) porteur de la lame de scie, le ou les pivots ou tourillons d'articulation de l'excentrique peut/peuvent être déplacé(s) par rotation entre les deux positions de fin de course notamment dans un angle pouvant atteindre 180°.

10. Scie circulaire comportant une lame de scie pouvant être déplacée de haut en bas en direction d'une table de support du matériel à travailler, de manière à effectuer un mouvement d'avance par rapport à une articulation de pivotement, selon l'une des revendications 1 à 9, caractérisée en ce que l'élément oscillant portant l'articulation (2) de pivotement du bras (4) porteur de la lame de scie est articulé de façon pivotante au-dessus du plan de la table (10) de support, et en ce que son axe pivot (9) de réglage est disposé de préférence plus bas que l'axe pivot (3) d'avance du bras (4) porteur de la lame de scie.

11. Scie circulaire à froid selon l'une des revendications 1 à 10, caractérisée en ce que le bras oscillant (8) formant l'élément oscillant est réalisé sous forme d'une fourche ou en forme de U qui reçoit l'extrémité pivotante du bras (4) porteur de la lame de scie entre ses deux branches (8a, 8b) de U, ces branches étant traversées par l'axe pivot (3) d'avance qui traverse cette même extrémité du bras (4) porteur de la lame de scie.

12. Scie circulaire à froid selon l'une des revendications 1 à 11, caractérisée en ce que le bras (4) porteur de la lame de scie est élargi au moins au niveau de l'articulation, et en ce que l'élargissement (17) rejoint au moins l'une des faces externes du bras oscillant (8) et est pourvu d'un perçage (18) de palier destiné à recevoir l'axe pivot (3) d'avance rallongé en conséquence.

13. Scie circulaire à froid selon l'une des revendications précédentes, caractérisée en ce que l'axe pivot (9) de réglage comporte - de préférence au centre - une interruption dans laquelle la lame (5) de scie peut s'engager lorsqu'elle occupe l'une des positions de fin de course.

Fig. 2

Fig. 1

Fig. 4

Fig. 3

Fig. 5

Fig. 6

Fig. 7